# EUROPÄISCHE PATENTSCHRIFT

(11) **EP 4 086 149 B1**
(45) Veröffentlichungstag und Bekanntmachung des Hinweises auf die Patenterteilung: **07.01.2026**
(21) Anmeldenummer: 22170874.6
(22) Anmeldetag: 29.04.2022
(51) Int. Cl.: B62J 1/00, B62J 1/22

(54) **FAHRRADSATTEL**
BICYCLE SADDLE
SELLE DE BICYCLETTE

(30) Priorität: 04.05.2021 DE 202021102387 U
(43) Veröffentlichungstag der Anmeldung: 09.11.2022
(73) Patentinhaber: Ergon International GmbH, 56070 Koblenz (DE)
(72) Erfinder: Krause, Andreas, 56068 Koblenz (DE)
(74) Vertreter: dompatent

(56) Entgegenhaltungen:
- EP-A1- 3 441 291
- DE-A1- 102018 211 090
- DE-U1- 202016 105 726
- DE-U1- 202017 000 484
- DE-U1- 202018 000 943
- DE-U1- 202018 006 218

## Beschreibung

Die Erfindung betrifft einen Fahrradsattel.

Fahrradsättel sind über ein an der Unterseite einer Sattelschale angeordnetes Sattelgestell mit Sattelstütze verbunden. Auf einer Oberseite der Sattelschale ist ein oder mehrere Sattelpolster zur Dämpfung angeordnet. Es sind Sattelpolster aus unterschiedlichen Materialien bekannt, wobei als Polstermaterial häufig ein PU-Schaum (Polyurethan-Schaum) verwendet wird. Die Polsterelemente sind von einer Deckschicht oder einem Überzug bedeckt, bzw. überspannt. Der Überzug erstreckt sich hierbei über die gesamte Oberseite des Sattels und ist üblicherweise mit einer Unterseite der Sattelschale fest verbunden. Das Sattelpolster, das aus mehreren Polstern bestehen kann, ist somit vollständig von einem Überzug abgedeckt. Dies ist erforderlich, da häufig verwendete Materialien für das Sattelpolster hydrophil sind und durch die Deckschicht das Eindringen von Wasser in das Polsterelement vermieden ist.

Das Dokument EP 3 441 291 A1 offenbart die Merkmalen der Präambel des Anspruchs 1.

Aufgabe der Erfindung ist es einen Fahrradsattel mit guten Komforteigenschaften zu schaffen.

Die Lösung der Aufgabe erfolgt erfindungsgemäß durch einen Fahrradsattel gemäß Anspruch 1.

Der erfindungsgemäße Fahrradsattel weist eine Sattelschale auf. An der Unterseite der Sattelschale ist ein Sattelgestell angeordnet, das zur Verbindung mit einer Sattelstütze dient. Auf einer Oberseite der Sattelschale ist ein Hauptpolster angeordnet. Auf der Oberseite des Hauptpolsters ist mindestens ein Zusatzpolster angeordnet. Erfindungsgemäß ist das Hauptpolster aus einem hydrophoben, insbesondere geschlossenzelligem Polstermaterial, hergestellt. Es handelt sich somit um ein Material, das weiterhin Eigenschaften eines Polsters, d.h. insbesondere Dämpfungseigenschaften aufweist, das andererseits jedoch hydrophob ist. Erfindungsgemäß ist ein umlaufender Randbereich des Hauptpolsters zumindest teilweise sichtbar. Einen Randbereich, bzw. einen seitlich sichtbaren, d.h. in Seitenansicht sichtbaren Bereich des Hauptpolsters sichtbar, d.h. ohne das Vorsehen einer Deckschicht oder eines Überzugs auszugestalten, ist aufgrund des erfindungsgemäßen Ausbildens des Hauptpolsters aus einem hydrophoben, insbesondere geschlossenzelligem Polstermaterial, möglich. Einen Randbereich des Hauptpolsters zumindest teilweise sichtbar auszugestalten hat neben designerischen Aspekten den Vorteil, dass für einen Benutzer oder Kunden unmittelbar sichtbar ist, welches Material für das Hauptpolster verwendet wurde. Ferner hat ein sichtbarer Randbereich den Vorteil, dass eine Deckschicht oder ein Überzug, zumindest teilweise, entfallen kann. Hierdurch kann die Herstellung ggf. vereinfacht und somit auch die Kosten reduziert werden. Dies ist insbesondere dann der Fall, wenn kein vorgespannter Überzug erforderlich ist, der an der Unterseite der Sattelschale fixiert werden muss. Beispielsweise ist eine partielle Deckschicht, die nur auf der Oberseite des Hauptpolsters und/oder des Zusatzpolsters angeordnet, beispielsweise aufgeklebt, ist, deutlich einfacher in der Herstellung und der Verarbeitung als eine an der Unterseite der Fahrradsattelschale fixierte Deckschicht.

Vorzugsweise ist das Hauptpolsterelement in dem umlaufenden Randbereich vollständig sichtbar. Insbesondere handelt es sich bei diesem Randbereich um den äußeren Bereich des Hauptpolsters, der insbesondere die Kontur der Sattelschale aufweist.

Vorzugsweise ist das Hauptpolster derart ausgebildet, dass es die Oberseite der Sattelschale vollständig bedeckt. In dieser bevorzugten Ausführungsform berührt das Zusatzpolster, die Oberseite der Sattelschale nicht. Das mindestens eine Zusatzpolster kann alternativ jedoch auch in einer Vertiefung des Hauptpolsters angeordnet sein, wobei die Vertiefung als durchgehende Öffnung im Hauptpolster ausgebildet ist, sodass das Zusatzpolster an der Oberseite der Sattelschale anliegt und mit dieser ggf. ebenfalls verbunden ist. Das insbesondere die Oberseite der Sattelschale vollflächig bedeckende Hauptpolster ist vorzugsweise durch Verkleben mit der Sattelschale verbunden. Ferner ist es möglich, dass die Verbindung zwischen der Oberseite der Sattelschale und dem Hauptpolster beim Herstellen des Hauptpolsters, wie beispielsweise beim Aufschäumen, Expandieren oder dgl. des Hauptpolsters, realisiert wird.

Vorzugsweise ist das mindestens eine Zusatzpolster in einem Sitzbereich des Fahrradsattels angeordnet. Der Sitzbereich ist derjenige Bereich, in dem der Benutzer des Fahrradsattels sitzt, d.h. in dem insbesondere die Sitzknochen, bzw. Sitzhöcker, des Benutzers angeordnet sind. Gerade in diesem Bereich ist eine gute Unterstützung erforderlich, um einen Fahrradsattel mit guten Komforteigenschaften zu verwirklichen. Bevorzugt ist es daher, dass in diesem Bereich zwei Zusatzpolster angeordnet sind, wobei jedes Zusatzpolster zur Unterstützung eines Sitzhöckers angeordnet ist. Die in dieser bevorzugten Ausführungsform vorgesehenen beiden Zusatzpolster sind somit, bezogen auf eine Mittellinie, bzw. Längsachse des Fahrradsattels im Sitzbereich links und rechts neben dieser Längsachse angeordnet.

Bei einer bevorzugten Weiterbildung der Erfindung ist an der Oberseite des Hauptpolsters zumindest eine Vertiefung vorgesehen. In der zumindest einen Vertiefung ist ein Zusatzpolster zumindest teilweise angeordnet. Das Zusatzpolster kann somit eine Höhe aufweisen, die der Höhe der Vertiefung entspricht, sodass eine Oberseite des Zusatzpolsters der Oberseite des Hauptpolsters entspricht, bzw. ein stufenfreier Übergang erfolgt. Insbesondere fluchten die beiden Oberseiten miteinander. Auch kann das Zusatzpolster eine Höhe aufweisen, die größer ist als die Höhe bzw. Tiefe der Vertiefung, sodass das Zusatzpolster über die Oberseite des Hauptpolsters vorsteht. Gegebenenfalls kann das Zusatzpolster einen Ansatz aufweisen, der derart ausgebildet ist, dass der Ansatz oberhalb des Hauptpolsters angeordnet ist, bzw. auf der Oberseite des Hauptpolsters aufliegt. Hierbei ist es bevorzugt, dass sich der Querschnitt des Zusatzpolsters, ausgehend von einer Oberseite des Zusatzpolsters nach unten in Richtung des Hauptpolsters verändert, insbesondere stufenweise verringert. Der Ansatz des Zusatzpolsters kann hierbei umlaufend oder nur in einzelnen Teilbereichen ausgebildet sein. Auch ist es möglich, dass die mindestens eine Vertiefung stufenförmig ausgebildet ist, sodass ein ggf. vollständig innerhalb der Vertiefung angeordnetes Zusatzpolster ebenfalls einen Ansatz aufweist.

Bei einer alternativen Ausführungsform ist nur ein einziges Zusatzpolster vorgesehen. Vorzugsweise bedeckt dieses Zusatzpolster das Hauptpolster im gesamten Sitzbereich des Fahrradsattels. Vorzugsweise deckt ein derartiges Zusatzpolster die Oberseite des Hauptpolsters vollständig ab. Bei einer derartigen Ausgestaltung eines erfindungsgemäßen Fahrradsattels ist es insbesondere möglich, dass in Seitenansicht sowohl das Hauptpolster als auch das Zusatzpolster sichtbar sind. Insbesondere können beide Polster im umlaufenden Randbereich zumindest teilweise, insbesondere vollständig sichtbar sein. Bei dieser Ausführungsform kann auf der Oberseite des Zusatzpolsters partiell eine Deckschicht vorgesehen sein, um beispielsweise im Sitzbereich eine für den Benutzer angenehmere Materialoberfläche zu realisieren, die Abnutzung zu reduzieren oder dergleichen. Je nach verwendetem Material muss keine derartige partielle Deckschicht vorgesehen sein.

Erfindungsgemäß ist auf einer Oberseite des mindestens einen Zusatzpolsters eine Deckschicht oder Schutzschicht angeordnet. Insbesondere kann die Deckschicht auf das Zusatzpolster aufgeklebt, aufvulkanisiert oder bereits während der Herstellung des Zusatzpolsters, beispielsweise beim Aufschäumen des Zusatzpolsters mit diesem verbunden werden. Die Deckschicht kann insbesondere aus einem widerstandsfähigen Kunststoffmaterial, beispielsweise PVC, hergestellt sein.

Vorzugsweise deckt die Deckschicht das mindestens eine Zusatzpolster jeweils nur teilweise ab. Insbesondere erfolgt ein Abdecken des Zusatzpolsters in einem Bereich der bei erhöhter Belastung, während der Benutzung und somit einem erhöhten Abrieb oder dergleichen ausgesetzt ist. Erfingungsgemäß deckt die Deckschicht zusätzlich zu einem Teil der Oberfläche des Zusatzpolsters oder der gesamten Fläche des Zusatzpolsters das Hauptpolster teilweise ab. Die Deckschicht ragt somit vorzugsweise über den Rand des Zusatzpolsters hinaus, sodass die Deckschicht auch einen Teil der Oberseite des Hauptpolsters abdeckt. Insbesondere ist die Oberseite des Hauptpolsters aber nicht vollständig mit der Deckschicht bedeckt. Durch ein derartiges Überstehen der Deckschicht über einen Rand des Zusatzpolsters kann ein zwischen dem Zusatzpolster und dem Hauptpolster ggf. vorhandener Spalt oder Schlitz abgedeckt werden. Hierdurch ist insbesondere ein Eindringen von Feuchtigkeit oder Schmutz in diesem Bereich vermieden. Bevorzugt ist es, dass die Deckschicht entlang des gesamten Randes des Zusatzpolsters über das Zusatzpolster vorsteht und somit den gesamten ggf. zwischen dem Zusatzpolster und dem Hauptpolster vorhandenen Spalt abdeckt. Vorzugsweise deckt die Deckschicht somit einen an das Zusatzpolster angrenzenden Bereich des Hauptpolsters insbesondere vollständig ab.

Des Weiteren ist es möglich, dass die in dem Hauptpolster angeordnete Vertiefung für ein Zusatzpolster derart ggf. stufenförmig ausgebildet ist, dass eine auf der Oberseite des Zusatzpolsters angeordnete Deckschicht, die über einen Randbereich des Zusatzpolsters hinaussteht, vollständig innerhalb der Vertiefung angeordnet ist. Die Vertiefung des Hauptpolsters, in der das Zusatzpolster mit überstehender Deckschicht angeordnet ist, ist somit derart ausgebildet, dass zwischen der Oberseite des Hauptpolsters und der Deckschicht ein fluchtender bzw. stufenfreier Übergang realisiert ist.

Das Vorsehen einer Deckschicht, die über das Zusatzpolster insbesondere am gesamten Umfang übersteht und der ggf. zwischen Zusatzpolster und Hauptpolster bestehenden Spalt abdeckt, hat den Vorteil, dass das Zusatzpolster vollständig vor Feuchtigkeit geschützt ist, da sämtliche Seiten des Zusatzpolsters entweder von der Deckschicht oder dem Hauptpolster umgeben ,bzw. abgedeckt sind.

Die Deckschicht kann auch derart ausgebildet sein, dass sie insbesondere alle Seitenflächen eines Zusatzpolsters abdeckt. Hierbei kann es sich um ein Zusatzpolster handeln, das teilweise oder vollständig in einer Vertiefung oder auch vollständig auf der Oberseite des Hauptpolsters angeordnet ist. Insbesondere durch eine vollständige Abdeckung der Seitenflächen ist ebenfalls vermieden, dass Feuchtigkeit in das Zusatzpolster eindringt. Gegebenenfalls kann die Deckschicht auch in eine Unterseite des Zusatzpolsters ragen, um die Gefahr des Eindringens von Feuchtigkeit weiter zu verringern. Eine derartige Anordnung der Deckschicht ist insbesondere dann von Vorteil, wenn das Zusatzpolster nicht aus einem hydrophoben Material hergestellt ist.

Der erfindungsgemäße Fahrradsattel weist erfindungsgemäß mindestens ein Zusatzpolster auf. Beim Vorsehen mehrerer Zusatzpolster können diese in ihrer Lage, Formgestaltung und Anordnung, wie vorstehend beschrieben, auch unterschiedlich ausgestaltet sein. Beispielsweise könnte auch ein weiteres Zusatzpolster im Mittelbereich oder an der Spitze des Sattels vorgesehen sein. Hierbei können die Zusatzpolster auch aus unterschiedlichen Materialien und/oder in unterschiedlicher Dicke vorgesehen sein.

Das Zusatzpolster kann aus einem Polstermaterial, wie einem PU-Schaum, hergestellt sein. Dies ist insbesondere dann möglich, wenn das Zusatzpolster, wie vorstehend beschrieben, derart angeordnet ist, dass das Eindringen von Feuchtigkeit vermieden ist.

In einer alternativen Ausführungsform ist das Zusatzpolster aus einem hydrophoben Polstermaterial hergestellt. Insbesondere handelt es sich um einen hydrophoben geschlossenzelligen Schaum. Vorzugsweise kann das Zusatzpolster aus einem geschlossenzelligen EVA (Ethylenvinylacetat) hergestellt sein. Ferner ist als Material auch ein Zell-Kautschuk geeignet. Das Zusatzpolster kann aus mehreren unterschiedlichen Materialien oder nur aus einem einzigen der vorstehenden Materialien hergestellt sein.

Das hydrophobe, insbesondere geschlossenzellige Polstermaterial des Hauptpolsters weist in besonders bevorzugter Ausführungsform ein E-TPU (expandiertes thermoplastisches Polyurethan) auf und ist insbesondere aus E-TPU hergestellt. Besonders geeignet für das Hauptpolster ist das von der Firma BASF unter dem Produktnamen "Infinergy" hergestellte Material. Insbesondere weist das für das Hauptpolster verwendete Material bzw. die verwendete Materialzusammensetzung gute Rückstellfähigkeit und/oder gute Vibrationsdämpfung und/oder hihe Querelastizität und/oder hohe Reisfestigkeit und/oder hohe Oberflächenstabilität gegen mechanische Beanspruchung auf.

Das Hauptpolsterelement weist vorzugsweise ein Elastizitätsmodul von 0,1 bis 10 MPa, insbesondere 0,1 bis 5 MPa und besonders bevorzugt 0,1 bis 1,0 MPa auf.

Des Weiteren ist es bevorzugt, dass das Material des Hauptpolsterelements ein gutes Rebound-Verhalten aufweist. Vorzugsweise liegt das Rebound-Verhalten des Hauptpolsterelements im Bereich von mehr als 30%, insbesondere mehr als 40% und besonders bevorzugt mehr als 50%.

Nachfolgend wird die Erfindung anhand bevorzugter Ausführungsformen unter Bezugnahme auf die anliegenden Zeichnungen näher erläutert.

Es zeigen:
- Figur 1: eine schematische Draufsicht eines Fahrradsattels,
- Figur 2: ein schematischer Längsschnitt des Fahrradsattels entlang der Linie II-II in Figur 1, und
- Figuren 3 bis 10: Querschnittsansichten unterschiedlicher Ausführungsformen entlang einer Linie A-A, bzw. in einem Sitzbereich des Fahrradsattels.

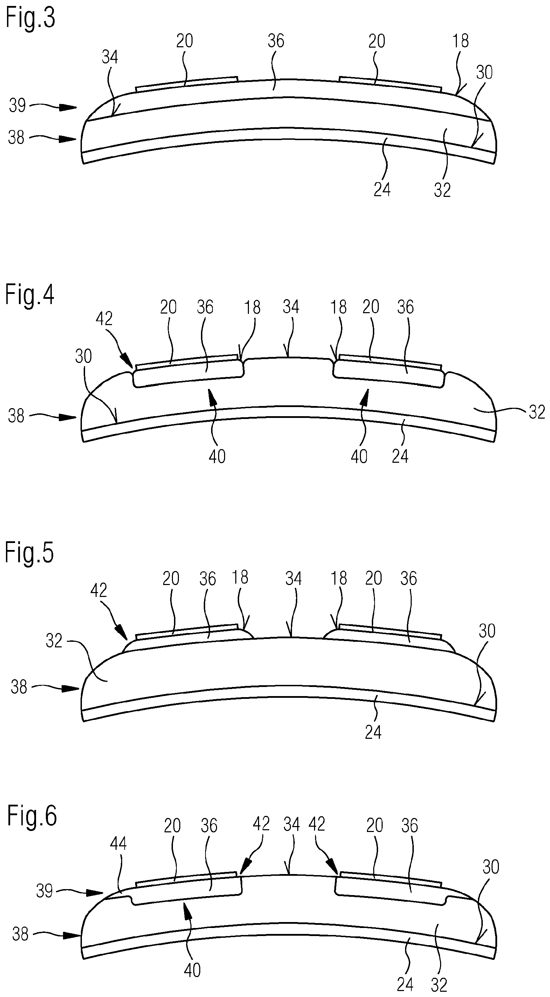

Ein Fahrradsattel weist eine Sattelspitze 10 auf. Hieran schließt sich ein vorderer Bereich 12 des Sattels an. Ferner weist ein Sattel in einem rückseitigen Bereich, d.h. einen verbreiterten Sitzbereich 14 auf. Der Sitzbereich 14 und der vordere Bereich 12 sind durch einen Mittelbereich 16 miteinander verbunden. Der erfindungsgemäße Fahrradsattel weist, wie insbesondere anhand der Figuren 3 bis 10 erläutert, unterschiedliche Anordnungen eines Hauptpolsters und einer oder mehrerer Zusatzpolster auf. Auf einer Oberseite 18 eines Haupt- oder Zusatzpolsters sind im Sitzbereich 14 zwei Deckschichten 20 angeordnet. Es handelt sich hierbei um zwei gesonderte Deckschichtelemente, die in dem Bereich der Sitzknochen angeordnet sind, da hier die Belastung der Oberfläche des Sattels besonders groß ist. Je nach Material der einzelnen Polsterelemente können die Deckschichten 20 auch entfallen.

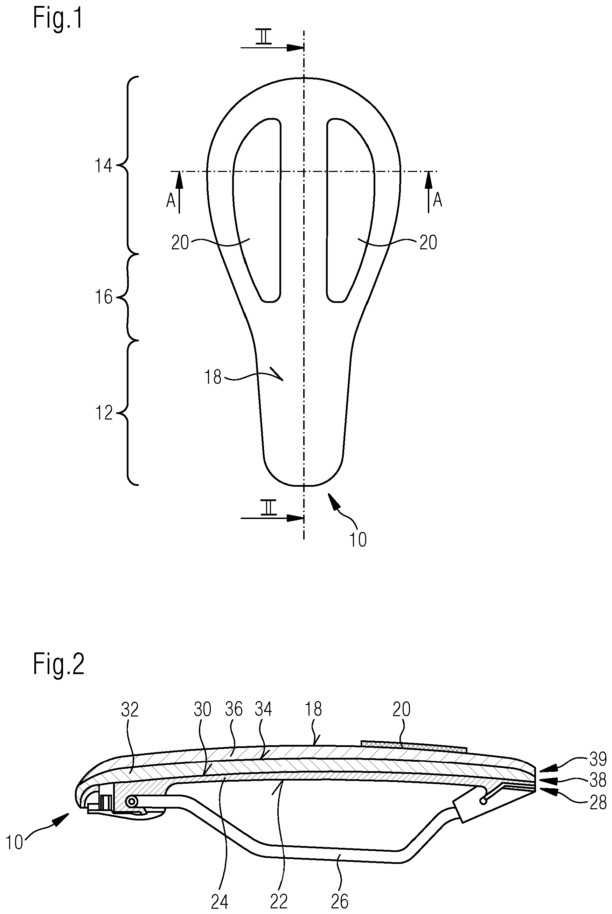

An einer Unterseite 22 (Figur 2) einer Sattelschale 24 ist ein Sattelgestell 26 angeordnet. Dies ist im Bereich der Sattelspitze 10 sowie auch im rückseitigen Bereich 28 der Sattelschale 24 mit dieser befestigt.

Auf einer Oberseite 30 der Sattelschale 10 ist in dem in Figur 2 dargestellten Ausführungsbeispiel ein Hauptpolster 32 angeordnet. Das Hauptpolster 32 erstreckt sich über die gesamte Oberseite 30 der Sattelschale 24 und ist vollflächig mit dieser verbunden, beispielsweise verklebt.

In dem in Figur 2 dargestellten Ausführungsbeispiel ist auf einer Oberseite 34 des Hauptpolsters 32 ein Zusatzpolster 36 angeordnet. Im Sitzbereich 14 des Sattels sind die beiden Deckschichten 20 angeordnet, insbesondere mit der Oberseite 18 fest verbunden.

Die Besonderheit des in Figur 2 dargestellten Ausführungsbeispiels besteht insbesondere darin, dass sowohl das Hauptpolster 32 als auch das Zusatzpolster 36 aus einem hydrophoben Polstermaterial hergestellt sind, wobei es sich insbesondere um ein geschlossenzelliges hydrophobes Polstermaterial handelt. Es ist somit nicht erforderlich, die beiden Polster 32, 36 mit einer Deckschicht zu umgeben, da die Gefahr des Eindringens von Feuchtigkeit nicht gegeben ist. Daher ist im dargestellten Ausführungsbeispiel sowohl ein umlaufender Randbereich 38 des Hauptpolsters 32 als auch ein ebenfalls umlaufender Randbereich 39 des Zusatzpolsters 36 sichtbar. Auch die Oberseite 18 des Zusatzpolsters ist mit der Ausnahme des durch die beiden Deckschichtelemente 20 abgedeckten Teils des Sitzbereichs 14 vollständig sichtbar.

In den Figuren 3 bis 10 sind unterschiedliche erfindungsgemäße Ausführungsformen des Fahrradsattels im Querschnitt dargestellt. Es handelt sich jeweils um Querschnitte im Sitzbereich 14, d.h. im Wesentlichen entlang der Linie A-A. Zur Verdeutlichung sind die einzelnen Elemente nicht straffiert dargestellt. Ähnliche und identische Element sind mit denselben Bezugszeichen bezeichnet. Das jeweils an der Unterseite 22 der Sattelschale 24 vorgesehene Sattelgestellt 26 ist in den Figuren 3 bis 10 ebenfalls nicht dargestellt.

Figur 3 zeigt den tatsächlichen Schnitt der in den Figuren 1 und 2 dargestellten Ausführungsformen, sodass auf der Oberseite 30 der Sattelschale 24 das Hauptpolster 32 angeordnet ist. Auf der Oberseite 34 des Hauptpolsters 32 ist das Zusatzpolster 36 angeordnet. Auf der Oberseite 18 des Zusatzpolsters 36 sind die beiden Deckschichtelemente 20 angeordnet.

Bei dem in Figur 4 dargestellten Ausführungsbeispiel weist das Hauptpolsterelement 32 zwei Vertiefungen 40 auf. Die beiden Vertiefungen erstrecken sich von der Oberseite 34 des Hauptpolsterelements 32 in Richtung der Oberseite 30 der Sattelschale 24. Innerhalb der Vertiefungen 40 ist jeweils ein Zusatzpolster 36 angeordnet. Auf der jeweiligen Oberseite 18 der beiden Zusatzpolster 36 ist jeweils das Deckschichtelement 20 angeordnet. Im dargestellten Ausführungsbeispiel erstrecken sich die Deckschichtelemente 20 nicht über die gesamte Oberseite 18 der beiden Zusatzpolster 36, sodass ein Randbereich der Zusatzpolster 36 sichtbar ist. Dies ist insbesondere dann möglich, wenn die Zusatzpolster 36 aus einem hydrophoben Material hergestellt sind.

Bei der weiteren alternativen, in Figur 5 dargestellten Ausführungsform ist das Zusatzpolster 36 unmittelbar auf der Oberseite 34 des Hauptpolsters 32 angeordnet. Eine Vertiefung ist nicht vorgesehen. Auf der Oberseite 18 des Zusatzpolsters 36 ist jeweils wiederum das Deckschichtelement 20 angeordnet. Auch in diesem Ausführungsbeispiel ist ein Randbereich 42 des Zusatzpolsters 36 sichtbar. Das Hauptpolster 32 weist in dem in Figur 5 dargestellten Ausführungsbeispiel keine Vertiefung 40 auf.

Auch können die beiden in Figur 4 und 5 dargestellten Ausführungsformen miteinander kombiniert werden, sodass das Zusatzpolster 36 in einer Vertiefung 40 angeordnet ist, jedoch auch eine Dicke aufweist, die größer ist als die Tiefe der Vertiefung 40. Das Zusatzpolster 36 steht somit teilweise über die Oberseite 34 des Hauptpolsters 32 vor.

Bei dem in Figur 6 dargestellten Ausführungsbeispiel weist das Hauptpolster 32 eine Vertiefung 40 auf. Diese ist in Richtung des Randbereichs 38 mit einer Stufe versehen. Insofern weist das Zusatzpolster 36 einen Ansatz 44 auf. Der Ansatz 44 überdeckt die Oberseite 34 des Hauptpolsters 32 im Randbereich, sodass in Seitenansicht im Bereich des Zusatzpolsters 36 sowohl der Randbereich 38 des Hauptpolsters 32 als auch der Randbereich 39 des Zusatzpolsters 36 sichtbar ist.

Auf der Oberseite 18 des Zusatzpolsters 36 ist wiederum das Deckschichtelement 20 angeordnet. Auch in diesem Ausführungsbeispiel ist ein Rand 42 des Zusatzpolsters 36 sichtbar und nicht von dem Deckelement 20 abgedeckt.

Bei den in Figur 3 bis 6 dargestellten Ausführungsformen ist das Zusatzpolster 36 nur teilweise von dem Deckschichtelement 20 abgedeckt. Dies ist insbesondere dann möglich, wenn das Zusatzpolster 36 aus einem hydrophoben Polstermaterial hergestellt ist. Gegebenenfalls kann das Deckschichtelement auch vollständig entfallen.

Das Zusatzpolsterelement 20 kann in den Ausführungsformen gemäß Figur 4 bis 6 auch derart ausgebildet sein, dass es das Zusatzpolster 36 an seiner Oberseite 18 vollständig bedeckt und insbesondere über das Zusatzpolster 36 vorsteht, sodass das Deckschichtelement teilweise auch an einer Oberseite 34 des Hauptpolsters 32 anliegt. In derartigen Ausführungsformen ist das Zusatzpolsterelement 36 vollständig von der Deckschicht 20 abgedeckt und an den Seitenflächen und Unterseiten entweder durch die Deckschicht 20 oder das Hauptpolster 32 umschlossen. Bei derartigen Ausführungsformen ist auch möglich, das Zusatzpolster 36 aus einem nicht hydrophoben Material herzustellen, da das Eindringen von Feuchtigkeit vermieden ist.

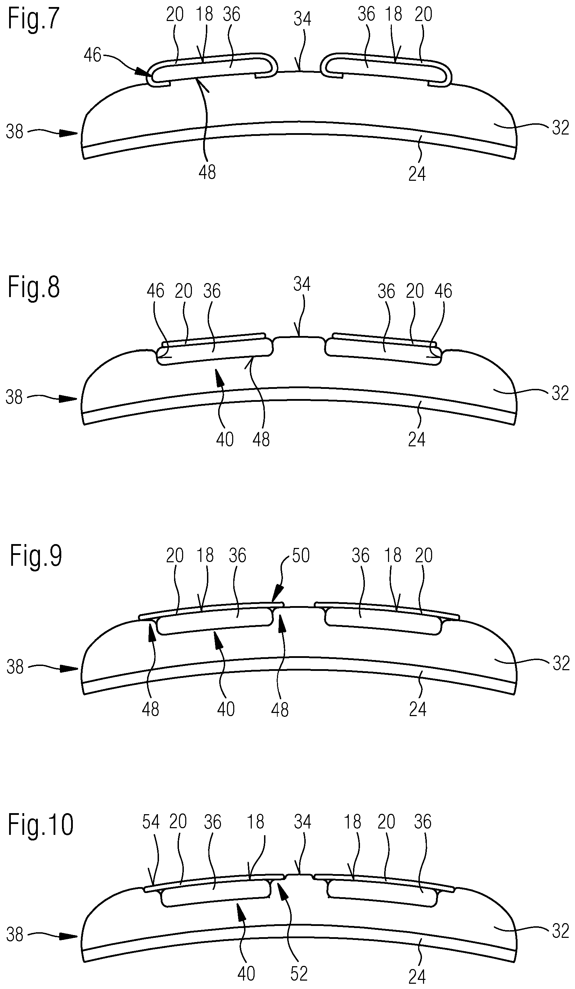

Bei dem in Figur 7 dargestellten Ausführungsbeispiel sind die Zusatzpolsterelemente 36 auf der Oberseite 34 des Hauptpolsters 32 angeordnet. Die Zusatzpolsterelemente 36 sind sowohl an einer Oberseite 18 als auch an Seitenflächen 46 von der Deckschicht 20 abgedeckt. Die Deckschicht 20 weist ferner einen Rand auf, der nach innen geführt ist und an einer Unterseite 48 der Zusatzpolster 36 anliegt. Die Zusatzpolster 36 sind somit von der Deckschicht 20 sowie an der Unterseite 48 zusätzlich von dem Hauptpolster 32 umgeben, sodass das Zusatzpolster 36 vor dem Eindringen von Feuchtigkeit geschützt ist. Insofern ist es bei dieser Ausführungsform möglich das Zusatzpolster 36 auch aus einem nicht hydrophoben Material herzustellen.

Bei dem in Figur 8 dargestellten Ausführungsbeispiel ist ein Zusatzpolsterelement 36 vorgesehen, dass entsprechend dem Zusatzpolsterelement 36 in Figur 7 ausgebildet ist. Der wesentliche Unterschied besteht darin, dass die Zusatzpolsterelemente 36 bei dem in Figur 8 dargestellten Ausführungsbeispiel in Vertiefungen 40 des Hauptpolsters 32 angeordnet sind.

Da die Deckschicht 20 die Seitenflächen 46 des Zusatzpolsters 36 umgibt und auch an einer Unterseite 48 des Zusatzpolsters 36 angeordnet ist, ist das Zusatzpolster wiederum vollständig von der Deckschicht 20 sowie an der Unterseite 48 zusätzlich vom Hauptpolster 32 umgeben. Insofern ist es auch bei dieser Ausführungsform möglich das mindestens eine Zusatzpolster 36 aus nicht hydrophobem Material herzustellen.

Auch bei der in Figur 9 dargestellten Ausführungsform weist das Hauptpolster 32 Vertiefungen 40 auf, in denen die Zusatzpolster 36 angeordnet sind. Die Deckschicht 20 ist hierbei derart ausgebildet, dass sie nicht nur die gesamte Oberseite 18 des Zusatzpolsterelements 36 überdeckt, sondern auch einen angrenzenden Bereich 48 des Hauptpolsters 32 abdeckt und mit diesem insbesondere durch Verkleben oder dergleichen fest verbunden sind. Hierdurch ist ein zwischen dem Zusatzpolster 36 und dem Hauptpolster 32 auftretender Schlitz 50 abgedeckt.

Auch in dem in Figur 9 dargestellten Ausführungsbeispiel ist das Zusatzpolster 36 vollständig ummantelt, entweder durch das Deckelement 20 oder das Hauptpolster 32, sodass das Zusatzpolster 36 wiederum aus einem nicht hydrophoben Material hergestellt werden kann.

Bei dem in Figur 10 dargestellten Ausführungsbeispiel ist die Vertiefung 40 derart ausgestaltet, dass sie eine Stufe 52 aufweist. Das in der Vertiefung 40 angeordnete Zusatzpolster 36 weist eine geringfügig geringere Dicke als die Gesamthöhe der Vertiefung 40 auf. Hierdurch ist es möglich, dass das Deckschichtelement 20 derart anzuordnen, dass es einerseits über die Oberseite 18 des Zusatzpolsters 36 vorsteht und im Bereich der Stufe 52 mit dem Hauptpolster 32 verbunden werden kann. Andererseits ragt eine Oberseite 54 des Deckschichtelements 20 nicht über die Oberseite 34 des Hauptpolsters 32 vor.

## Patentansprüche

1. Fahrradsattel, mit
einer Sattelschale (24),
einem mit einer Unterseite (22) der Sattelschale (24) verbundenen Sattelgestell (26),
einem auf einer Oberseite (30) der Sattelschale (24) angeordneten Hauptpolster (32) , wobei das Hauptpolster (32) aus hydrophobem, insbesondere geschlossenzelligem Polstermaterial hergestellt ist und ein umlaufender Randbereich (38) des Hauptpolster (32) zumindest teilweise sichtbar ist und
mindestens einem an einer Oberseite (34) des Hauptpolsters (32) angeordnetem Zusatzpolster (36), wobei auf einer Oberseite (18) des Zusatzpolsters (36) ein Deckschichtelement (20) angeordnet ist,
**dadurch gekennzeichnet, dass** das Deckschichtelement (20) zusätzlich die Oberseite (34) des Hauptpolsters (32) teilweise abdeckt, insbesondere in einem des Zusatzpolster (36) umgebenden Bereich abdeckt.

2. Fahrradsattel, mit einer Sattelschale nach Anspruch 1, **dadurch gekennzeichnet, dass** das Hauptpolster (32) in dem umlaufenden Randbereich (38) vollständig sichtbar ist.

3. Fahrradsattel, mit einer Sattelschale nach Anspruch 1 oder 2, **dadurch gekennzeichnet, dass** das Hauptpolster (32) die Oberseite (30) der Sattelschale (24) vollständig bedeckt.

4. Fahrradsattel, mit einer Sattelschale nach Anspruch 1 bis 3, **dadurch gekennzeichnet, dass** das mindestens eine Zusatzpolster (36) in einem Sitzbereich (14) angeordnet ist, wobei insbesondere je Sitzhöcker ein Zusatzpolster (36) angeordnet ist.

5. Fahrradsattel, mit einer Sattelschale nach einem der Ansprüche 1 bis 4, **dadurch gekennzeichnet, dass** an der Oberseite (34) des Hauptpolsters (32) zumindest eine Vertiefung (40) vorgesehen ist, in der ein Zusatzpolster (36) zumindest teilweise angeordnet ist.

6. Fahrradsattel, mit einer Sattelschale nach einem der Ansprüche 1 bis 5, **dadurch gekennzeichnet, dass** das Zusatzpolster (36) einen Ansatz (44) aufweist, der auf der Oberseite (34) des Hauptpolsters (32) angeordnet ist.

7. Fahrradsattel, mit einer Sattelschale nach einem der Ansprüche 1 bis 6, **dadurch gekennzeichnet, dass** die Oberseite (34) des Hauptpolsters (32) stufenfrei in eine Oberseite (18) mindestens eines der Zusatzpolster (36) übergeht.

8. Fahrradsattel, mit einer Sattelschale nach einem der Ansprüche 1 bis 4, **dadurch gekennzeichnet, dass** nur ein einziges Zusatzpolster (36) vorgesehen ist, dass die Oberseite (34) des Hauptpolsters (32) insbesondere vollständig abdeckt.

9. Fahrradsattel, mit einer Sattelschale nach einem der Ansprüche 1 bis 8, **dadurch gekennzeichnet, dass** ein Randbereich (39) des Zusatzpolsters (36) zumindest teilweise sichtbar ist, insbesondere der umlaufende Randbereich (39) des Zusatzpolsters (36) vollständig sichtbar ist.

10. Fahrradsattel, mit einer Sattelschale nach einem der Ansprüche 1 bis 9, **dadurch gekennzeichnet, dass** das die Oberseite (18) des Zusatzpolsters (36) nur teilweise abdeckt.

11. Fahrradsattel, mit einer Sattelschale nach einem der Ansprüche 1 bis 10, **dadurch gekennzeichnet, dass** das mindestens eine Zusatzpolster (36) von dem Deckschichtelement (20) und an das Zusatzpolster (36) angrenzende Bereiche des Hauptpolsters (32) vollständig umgeben ist.

12. Fahrradsattel, mit einer Sattelschale nach Anspruch 5, **dadurch gekennzeichnet, dass** das Deckschichtelement (20) und das zugehörige Zusatzpolster (36) vollständig innerhalb der Vertiefung (40) des Hauptpolsters (32) angeordnet ist.

13. Fahrradsattel, mit einer Sattelschale nach einem der Ansprüche 1 bis 12, **dadurch gekennzeichnet, dass** eine, insbesondere alle Seitenflächen (46) des mindestens einen Zusatzpolsters (36) abgedeckt sind, wobei das Deckschichtelement (20) vorzugsweise in eine Unterseite (48) des Zusatzpolsters (36) ragt.

14. Fahrradsattel, mit einer Sattelschale nach einem der Ansprüche 1 bis 13, **dadurch gekennzeichnet, dass** beim Vorsehen mehrerer Zusatzpolster (36) einzelne Zusatzpolster (36) unterschiedlich ausgebildet sein können.

15. Fahrradsattel, mit einer Sattelschale nach einem der Ansprüche 1 bis 14, **dadurch gekennzeichnet, dass** das Zusatzpolster (36) aus hydrophobem Polstermaterial hergestellt ist, das aus geschlossenzelligem Polstermaterial hergestellt ist, geschlossenzelliges EVA (Ethylenvinylacetat) aufweist, insbesondere aus EVA hergestellt ist, wobei vorzugsweise das Hauptpolster (32) E-TPU (expandiertes thermoplastisches Polyurethan) aufweist, insbesondere aus E-TPU hergestellt ist.

## Claims

1. Bicycle saddle comprising:
a saddle shell (24),
a saddle frame (26) connected to a lower side (22) of the saddle shell (24),
a main pad (32) arranged on an upper side (30) of the saddle shell (24), the main pad (32) being made of hydrophobic, in particular closed-cell pad material and a circumferential edge portion (38) of the main pad (32) is at least partly visible, and
at least one additional pad (36) arranged on an upper side (34) of the main pad (32), a cover layer element (20) being arranged on an upper side (18) of the additional pad (36),
**characterized in that**
the cover layer element (20) additionally covers a part of the upper side (34) of the main pad (32), in particular covering the same in a region surrounding the additional pad (36).

2. Bicycle saddle comprising a saddle shell according to claim 1, **characterized in that** the main pad (32) is fully visible in the circumferential edge portion (38).

3. Bicycle saddle comprising a saddle shell according to claim 1 or 2, **characterized in that** the main pad (32) fully covers the upper side (30) of the saddle shell (24).

4. Bicycle saddle comprising a saddle shell according to claims 1 to 3, **characterized in that** the at least one additional pad (36) is arranged in a seat region (14), wherein in particular one additional pad (36) is provided per ischial tuberosity.

5. Bicycle saddle comprising a saddle shell according to one of claims 1 to 4, **characterized in that** at least one recess (40) is provided at the upper side (34) of the main pad (32), in which recess an additional pad (36) is arranged at least in part.

6. Bicycle saddle comprising a saddle shell according to one of claims 1 to 5, **characterized in that** the additional pad (36) has a projection (44) arranged on the upper side (34) of the main pad (32).

7. Bicycle saddle comprising a saddle shell according to one of claims 1 to 6, **characterized in that** the upper side (34) of the main pad (32) transitions into an upper side (18) of at least one of the additional pads (36) in a stepless manner.

8. Bicycle saddle comprising a saddle shell according to one of claims 1 to 4, **characterized in that** only a single additional pad (36) is provided which covers the upper side (34) of the main pad (32), in particular fully.

9. Bicycle saddle comprising a saddle shell according to one of claims 1 to 8, **characterized in that** an edge portion (39) of the additional pad (36) is at least partly visible, wherein in particular the circumferential edge region (39) of the additional pad (36) is fully visible.

10. **Bicycle saddle comprising a saddle shell according to one of claims 1 to 9, characterized in that a cover layer element (20) covers the upper side (18) of the additional pad (36) only in part.**

11. Bicycle saddle comprising a saddle shell according to one of claims 1 to 10, **characterized in that** thew at least one additional pad (36) is fully surrounded by the cover layer element (20) and portions of the main pad (32) adjoining the additional pad (36).

12. Bicycle saddle comprising a saddle shell according to claim 5, **characterized in that** the cover layer element (20) and the associated additional pad (36) are arranged fully within the recess (40) of the main pad (32).

13. Bicycle saddle comprising a saddle shell according to one of claims 1 to 12, **characterized in that** one, in particular all lateral surfaces (46) of the at least one additional pad (36) are covered, the cover layer element (20) preferably protruding into a lower side (48) of the additional pad (36).

14. Bicycle saddle comprising a saddle shell according to one of claims 1 to 13, **characterized in that** when a plurality of additional pads ((36) are provided, individual additional pads (36) can be designed differently.

15. Bicycle saddle comprising a saddle shell according to one of claims 1 to 14, **characterized in that** the additional pad (36) is made of hydrophobic pad material made from closed-cell pad material, comprises closed cell EVA (ethylene vinyl acetate), is in particular made from EVA, wherein preferably the main pad (32) comprises E-TPU (expanded thermoplastic polyurethane), is in particular made from E-TPU.

## Revendications

1. Selle de bicyclette avec
une coque de selle (24),
un châssis de selle (26) relié à une face inférieure (22) de la coque de selle (24),
un rembourrage principal (32) disposé sur une face supérieure (30) de la coque de selle (24), le rembourrage principal (32) étant fait en un matériau de rembourrage hydrophobe, notamment à cellules fermées, et une zone périphérique (38) du rembourrage principal (32) étant au moins partiellement visible, et
au moins un rembourrage supplémentaire (36) disposé sur une face supérieure (34) du rembourrage principal (32), un élément de couche de recouvrement (20) étant disposé sur une face supérieure (18) du rembourrage supplémentaire (36),
**caractérisée en ce que** l'élément de couche de recouvrement (20) recouvre aussi partiellement la face supérieure (34) du rembourrage principal (32), notamment dans une zone entourant le rembourrage supplémentaire (36).

2. Selle de bicyclette avec une coque de selle selon la revendication 1, **caractérisée en ce que** le rembourrage principal (32) est entièrement visible dans la zone périphérique (38).

3. Selle de bicyclette avec une coque de selle selon la revendication 1 ou 2, **caractérisée en ce que** le rembourrage principal (32) recouvre la face supérieure (30) de la coque de selle (24) entièrement.

4. Selle de bicyclette avec une coque de selle selon l'une des revendications 1 à 3, **caractérisée en ce que** ledit au moins un rembourrage supplémentaire (36) est disposé dans une zone d'assise (14), un rembourrage supplémentaire (36) respectif étant disposé pour chaque os ischion.

5. Selle de bicyclette avec une coque de selle selon l'une des revendications 1 à 4, **caractérisée en ce que**, à la surface (34) du rembourrage principal (32), au moins un enfoncement (40) est prévu dans lequel un rembourrage supplémentaire (36) est disposé au moins partiellement.

6. Selle de bicyclette avec une coque de selle selon l'une des revendications 1 à 5, **caractérisée en ce que** le rembourrage supplémentaire (36) comprend une excroissance (44) qui est disposée sur la face supérieure (34) du rembourrage principal (32).

7. Selle de bicyclette avec une coque de selle selon l'une des revendications 1 à 6, **caractérisée en ce que** la face supérieure (34) du rembourrage principal (32) passe sans décrochement à une face supérieure (18) d'au moins un des rembourrages supplémentaires (36).

8. Selle de bicyclette avec une coque de selle selon l'une des revendications 1 à 4, **caractérisée en ce qu'**un seul rembourrage supplémentaire (36) est prévu qui recouvre entièrement la face supérieure (34) du rembourrage principal (32).

9. Selle de bicyclette avec une coque de selle selon l'une des revendications 1 à 8, **caractérisée en ce qu'**une zone périphérique (39) du rembourrage supplémentaire (36) est au moins partiellement visible, que, plus particulièrement, la zone périphérique (39) du rembourrage supplémentaire (36) est entièrement visible.

10. Selle de bicyclette avec une coque de selle selon l'une des revendications 1 à 9, **caractérisée en ce que** la face supérieure (18) du rembourrage supplémentaire (36) recouvre seulement partiellement.

11. Selle de bicyclette avec une coque de selle selon l'une des revendications 1 à 10, **caractérisée en ce que** ledit au moins un rembourrage supplémentaire (36) est entièrement entouré de l'élément de couche de recouvrement (20) et de zones du rembourrage principal (32) adjacentes au rembourrage supplémentaire (36).

12. Selle de bicyclette avec une coque de selle selon la revendication 5, **caractérisée en ce que** l'élément de couche de recouvrement (20) et le rembourrage supplémentaire (36) sont disposés entièrement à l'intérieur du creux (40) du rembourrage principal (32).

13. Selle de bicyclette avec une coque de selle selon l'une des revendications 1 à 12, **caractérisée en ce qu'**une, notamment toutes les faces latérales (46) dudit au moins un rembourrage supplémentaire (36) sont recouvertes, l'élément de couche de recouvrement (20) s'étendant de préférence jusque dans une face inférieure (48) du rembourrage supplémentaire (36).

14. Selle de bicyclette avec une coque de selle selon l'une des revendications 1 à 13, **caractérisée en ce que**, lorsque plusieurs rembourrages supplémentaires (36) sont prévus, différents rembourrages supplémentaires (36) peuvent être formés différemment.

15. Selle de bicyclette avec une coque de selle selon l'une des revendications 1 à 14, **caractérisée en ce que** le rembourrage supplémentaire (36) est fait en un matériau hydrophobe qui est fait en un matériau de rembourrage à cellules fermées et comprend de l'EVA (éthylène acétate de vinyle), notamment est fait en EVA, le rembourrage principal (32) comprenant de l'E-TPU (polyuréthane thermoplastique expansé), étant fait notamment en E-TPU.
